## Europäisches Patentamt

## European Patent Office

## Office européen des brevets

(11) Veröffentlichungsnummer: **0 270 157**
**B1**

(12) **EUROPÄISCHE PATENTSCHRIFT**

(51) Int. Cl.⁴: **C03B 37/018**

(45) Veröffentlichungstag der Patentschrift:
**21.03.90**

(21) Anmeldenummer: **87202139.9**

(22) Anmeldetag: **05.11.87**

(30) Priorität: **17.11.86  NL 8602910**

(43) Veröffentlichungstag der Anmeldung:
**08.06.88 Patentblatt 88/23**

(45) Bekanntmachung des Hinweises auf die Patenterteilung:
**21.03.90 Patentblatt 90/12**

(84) Benannte Vertragsstaaten:
**DE FR GB NL SE**

(56) Entgegenhaltungen:
**EP-A- 0 129 291**
**EP-A- 0 173 659**
**US-E- 30 635**

(73) Patentinhaber: **N.V. Philips' Gloeilampenfabrieken,
Groenewoudseweg 1, NL-5621 BA Eindhoven(NL)**

(72) Erfinder: **Eikelboom, Herman Willem, c/o INT.
OCTROOIBUREAU B.V. Prof. Holstlaan 6, NL-5656 AA
Eindhoven(NL)**

(74) Vertreter: **Pennings, Johannes et al, Internationaal
Octrooibureau B.V. Prof. Holstlaan 6, NL-5656 AA
Eindhoven(NL)**

(54) **Vorrichtung zum Anbringen von Glasschichten auf der Innenseite eines Rohres.**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine Vorrichtung zum Anbringen von Glasschichten auf der Innenseite eines Glasrohres mit einer Gaszuführungsvorrichtung, die mit einem Ende des Rohres verbunden werden kann, einem Ofen zum Erhitzen des Rohres, einem Resonator mit einem Schwingungsraum zum Erzeugen eines Plasmas in dem Rohr und mit Mitteln, um den Resonator und das Rohr gegeneinander zu bewegen, einem HF-Generator, der mit dem Schwingungsraum verbunden ist und mit einer Vakuumpumpe, die mit dem anderen Ende des Glasrohres verbunden werden kann.

Eine derartige Vorrichtung ist beispielsweise in der Europäischen Patentanmeldung 0 129 291 beschrieben. Bei dieser bekannten Vorrichtung sind Mittel vorgesehen, um das Rohr während des Glasauftragens entsprechend einem bestimmten Plan zu drehen. Vorrichtungen dieser Art werden dazu verwendet, Vorformen zum Ziehen optischer Fasern herzustellen.

Ein Verfahren zur Vergrösserung der Auftraggeschwindigkeit besteht daraus, dass die dem Plasma zugeführte Leistung und die Menge pro Zeiteinheit dem Rohr zugeführter Gase zur Bildung der Glasschichten vergrössert werden. Dabei steigt aber auch die Wärmeabgabe durch das Plasma je Oberflächeneinheit. Eine unvermeidbare Bedingung zur einwandfreien Durchführung des sogenannten nicht isothermen Plasma, c.v.d.-Verfahrens zum Herstellen optischer Fasern ist, dass die Temperatur in dem von dem Rohr eingeschlossenen Raumes auf einem Wert beibehalten wird, der unterhalb der Temperatur liegt, bei der in dem Gas in dem Rohr eine homogene Reaktion auftritt. In der Praxis wird die Temperatur des Rohres unter 1200°C gehalten. Wenn eine homogene Reaktion auftritt, werden in der Gasphase Glasrussteilchen gebildet, die in die Glasschichten die gleichzeitig durch eine heterogene Reaktion gebildet werden, eingebaut werden. Ein anderes Problem, dass bei Vergrösserung der in das Plasma aufgenommenen Leistung und der damit einhergehenden grösseren Wärmeabgabe durch das Plasma je Oberflächeneinheit eine immer grössere Rolle spielt ist, über die Länge des Rohres und über dieZeit gesehen, die ungleichmässige Erwärmung des Rohres. Dass eine derartige ungleichmässige Erwärmung des Rohres durch das Plasma auftreten muss, lässt sich leicht erkennen.

Zwischen den Wendestellen des Plasmas befindet sich in dem Rohr ein Punkt, an dem das Plasma regelmässig nach gleichen Zeitperioden vorbeigeht. Links und rechts von diesem Punkt treten zwischen aufeinanderfolgenden Durchgängen des Plasmas Zeitdifferenzen auf. Weiterhin tritt an den Wendestellen der Bewegung des Plasmas eine Geschwindigkeitsverzögerung auf, wodurch die relative Aufenthaltszeit des Plasmas und damit die Wärmeabgabe je Oberflächeneinheit örtlich vergrössert wird. Eine weitere dabei auftretende Komplikation ist, dass sich das Plasma innerhalb des Schwingungsraumes nicht symmetrisch zu demselben befindet, sondern im allgemeinen gegenüber dem Schwingungsraum in der Richtung der Vakuumpumpte verschoben liegt. Ausserdem ist die Wärmeabgabe durch das Plasma je Oberflächeneinheit über die Länge des Plasmas nicht gleich.

Die Erfindung hat nun zur Aufgabe, Massnahmen zu schaffen, die als wirksames Mittel angewandt werden können, um die Wärmebelastung des Rohres durch das Plasma bei Vergrösserung der Plasmaleistung zu beschränken.

Diese Aufgabe wird nach der Erfindung gelöst mit einer Vorrichtung der eingangs erwähnten Art, die das Kennzeichen aufweist, dass der Resonator aus einem als Kanal zum Aufnehmen des Rohres geeigneten, forciert gekühlten Körper besteht, wobei wenigstens die Kanalwand aus einem die Wärme gut leitenden Material besteht und wobei die dem Rohr zugewandte Kanalwand über demjenigen Teil, in dem in dem Rohr im Gebracht der Vorrichtung weniger als 40 % der maximalen Wärmemenge je Oberflächeneinheit durch das Plasma abgegeben wird, mit einer wärmeisolierenden Schicht versehen ist.

Ein Ausführungsbeispiel der Erfindung ist in der Zeichnung dargestellt und wird im folgenden näher beschrieben. Es zeigen:

Fig. 1 eine schematische Darstellung einer Vorrichtung zum Anbringen von Glas auf der Innenseite eines Rohres,

Fig. 2 einen erfindungsgemässen Resonator und einen Rohrteil.

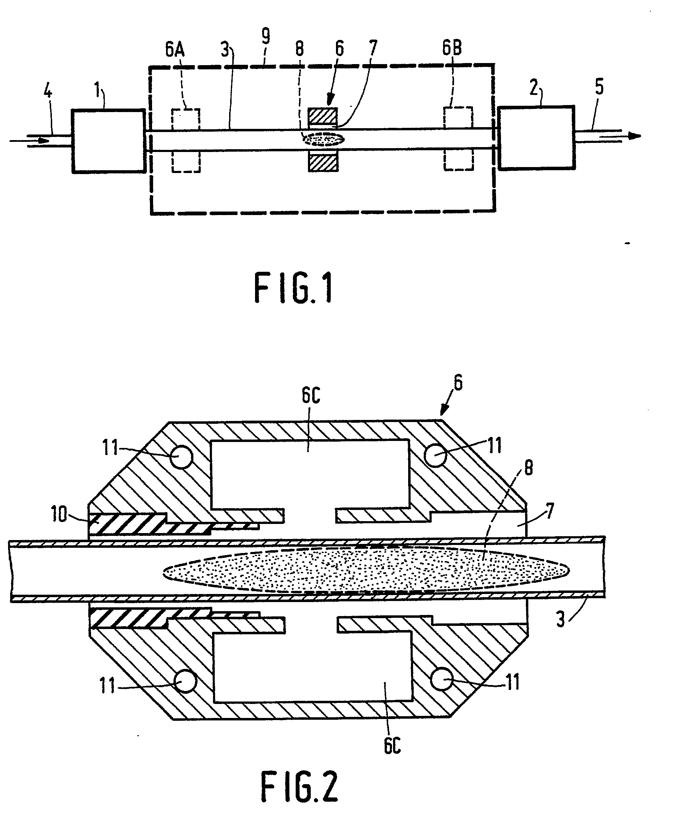

Der in Fig. 1 dargestellte Teil der Vorrichtung besteht aus zwei drehbaren Gasdurchführungen 1 und 2, die synchron zueinander kontinuierlich oder schrittweise das zwischen den Gasdurchführungen 1 und 2 eingeklemmte Rohr 3 im Gebrauch der Vorrichtung drehen lassen, wobei die Enden des Rohres 3 bei 4 und 5 mit einer (nicht dargestellten) Gaszuführungsvorrichtung bzw. Vakuumpumpe verbunden sind. Die Vorrichtung weist weiterhin einen in Fig. 2 detailliert dargestellten Resonator 6 auf mit einem Kanal 7 der das Rohr 3 umfasst und einen Schwingungsraum aufweist zum Erzeugen des Plasmas 8 in dem Rohr. 6A und 6B zeigen die äussersten Stellungen des Resonators 6 beim Hin- und Herbewegen (Bewegungsrichtung, Verbindung mit dem HF-Generator und der HF-Generator nicht dargestellt). Um das Rohr 3 befindet sich ein Ofen 9, der schematisch punktiert dargestellt ist.

Es lässt sich leicht erkennen, dass sich der Zeitverlauf zwischen zwei Durchgängen in der Nähe der Wendestellen 6A und 6B dem Wert Null nähern kann. Der Zeitverlauf bis zu den nächsten zwei Durchgängen, zwischen denen sich der Zeitverlauf dem Wert Null nähert, ist von der Länge des Rohres zwischen den Wendestellen und der Geschwindigkeit, mit der der Resonator 6 am Rohr entlang bewegt wird, abhängig. In der Mittellage sind die Zeitverläufe zwischen den Durchgängen etwa gleich.

In Fig. 2 ist der Resonator 6 im Schnitt dargestellt. Der Resonator 6 hat eine zylindrische Form und umschliesst einen Kanal 7 zum Aufnehmen des Rohres 3 und einen Schwingungsraum 6C. Dieser Schwingungsraum 6C ist mittels eines nicht dargestellten Wellenleiters mit einem nicht dargestellten HF-Generator verbunden. In Fig. 2 ist angegeben, dass das Plasma 8 gegenüber dem Schwingungsraum 6C in Richtung der Gasabfuhr verschoben liegt (Richtung Pfeil). Derjenige Teil des Kanals 7, in dem das Plasma weniger als 40 % der maximalen Wärmeabgabe je Oberflächeneinheit an Wärme abgibt oder mit anderen Worten, wo der Wärmefluss kleiner ist als 40 % des maximalen Wärmeflusses, ist mit einer Schicht 10 aus wärmeisolierendem und/oder wärmereflektierendem Material in Form einer Faser- oder Körnerschicht aus $SiO_2$, $Al_2O_3$, $TiO_2$, MgO oder Gemischen dieser Stoffe versehen.

An der Wendestelle 6B in Fig. 1 ist die Erhitzung des Rohres durch das Plasma relativ am höchsten, hier ist die Kühlleistung des Resonators 6 auch am höchsten. Auf der Seite der Wendestelle 6A ist die Wärmeabgabe niedriger, hier ist die Kühlleistung des Resonators 6 durch das Vorhandensein der wärmeisolierenden Schicht 10 verringert. Dies führt zu einer gleichmässigeren Wärmeverteilung längs des Rohres. Der Resonator 6 wird über Kühlwasserleitungen 11 gekühlt. Der Resonatorkörper kann aus beispielsweise Aluminium, Kupfer, Messing, Stahl, Silber, Gold oder Platin bestehen.

**Patentansprüche**

1. Vorrichtung zum Anbringen von Glasschichten auf der Innenseite eines Glasrohres (3) mit einer Gaszuführungsvorrichtung, die mit einem Ende (4, 5) des Rohres (3) verbunden werden kann, einem Ofen (9) zum Erhitzen des Rohres (3), einem Resonator (6) mit einem Schwingungsraum (6C) zum Erzeugen eines Plasmas (8) in dem Rohr (3) und mit Mitteln, um den Resonator (6) und das Rohr (3) gegeneinander zu bewegen, einem HF-Generator, der mit dem Schwingungsraum (6C) verbunden ist und mit einer Vakuumpumpe, die mit dem anderen Ende des Glasrohres (3) verbunden werden kann, dadurch gekennzeichnet, dass der Resonator (6) aus einem als Kanal (7) zum Aufnehmen des Rohres (3) geeignetem forciert gekühlten Körper besteht, wobei wenigstens die Kanalwand aus einem die Wärme gut leitenden Material besteht und wobei die dem Rohr (3) zugewandte Kanalwand über demjenigen Teil, in dem in dem Rohr (3) im Gebrauch der Vorrichtung weniger als 40% der maximalen Wärmemenge je Oberflächeneinheit durch das Plasma (8) abgegeben wird, mit einer wärmeisolierenden Schicht (10) versehen ist.

2. Vorrichtung nach Anspruch 1, dadurch gekennzeichnet, dass die wärmeisolierende Schicht (10) aus Fasern und/oder Körnern aus einem oder mehreren Stoffen der durch $SiO_2$, $Al_2O_3$, $TiO_3$ und MgO gebildeten Gruppe besteht.

**Claims**

1. A device for providing glass layers on the inside of a glass tube (3), comprising a gas supply device which can be connected to one end (4, 5) of the tube, a furnace (9) for heating the tube (3), a resonator (6) comprising a resonant cavity (6C) for generating a plasma (8) in the tube (3), and means to move the resonator (6) and the tube (3) relative to each other, a high-frequency generator which is connected to the resonant cavity (6C), and a vacuum pump which can be connected to the opposite end of the glass tube (3), characterized in that the resonator (6) comprises a forced-colled body which can suitably be used as a duct (7) for receiving the tube (3), of which body at least the wall of the duct consists of a properly heat-conducting material and in which the wall of the duct facing the tube (3) comprises a heat-insulating layer (10) over that part within which during operation of the device less than 40% of the maximum quantity of thermal energy per surface unit is delivered by the plasma (8) in the tube (3).

2. A device as claimed in Claim 1, characterized in that the heat-insulating layer (10) consists of fibres and/or grains of one or more substances from the group consisting of $SiO_2$, $Al_2O_3$, $TiO_2$ and MgO.

**Revendications**

1. Appareil pour appliquer des couches en verre sur la surface intérieure d'un tube en verre (3) comportant un dispositif d'amenée de gaz qui peut être raccordé à une extrémité (4, 5) du tube (3), un four (9) pour chauffer le tube (3), un résonateur (6) muni d'une enceinte de vibration (6C) pour engender un plasma (8) dans le tube (3) et des moyens pour déplacer le résonateur (6) et le tube (3) l'un par rapport à l'autre, un générateur haute-fréquence qui est raccordé à l'enceinte de vibration (6C) et une pompe à vide qui peut être raccordée à l'autre extrémité du tube en verre (3), caractérisé en ce que le résonateur (6) est constitué par un corps refroidi de façon forcée muni d'un canal (7) pour l'introduction du tube, la paroi du canal étant constituée par un matériau bon conducteur de la chaleur, alors que la partie de la paroi du canal qui se situe vis-à-vis du tube et dans lequel, dans le tube (3), lors de l'utilisation du dispositif, moins de 40% de la quantité de chaleur maximale est dégagée par unité de surface par le plasma (8) est munie d'une couche calorifuge (10).

2. Dispositif selon la revendication 1, caractérisé en ce que la couche calorifuge (10) est constituée par des fibres et/ou des grains en une ou plusieurs substances du groupe formé par $SiO_2$, $Al_2O_3$, $TiO_2$ et MgO.

FIG.1

FIG.2